# EUROPÄISCHE PATENTANMELDUNG

(11) **EP 3 904 303 A1**
(43) Veröffentlichungstag der Anmeldung: **03.11.2021**
(21) Anmeldenummer: 20214435.8
(22) Anmeldetag: 16.12.2020
(51) Int. Cl.: C03C 3/21, C03C 4/14, C03C 10/00, C01G 25/00, C01G 33/00, H01M 10/0562, H01B 1/08, H01M 10/052

(54) **FESTKÖRPER-LITHIUMIONENLEITER**

(30) Priorität: 29.04.2020 DE 102020111658
(71) Anmelder: Schott AG, 55122 Mainz (DE)
(72) Erfinder: Dr. Schuhmacher, Jörg, 70806 Kornwestheim (DE); Treis, Philipp, 56858 St. Aldegund (DE); Dr. Stöhr, Ulrike, 55127 Mainz (DE); Kirsch, Thomas, 55126 Mainz (DE); Dr. Schmidbauer, Wolfgang, 55126 Mainz (DE); Dr. Roters, Andreas, 55118 Mainz (DE)
(74) Vertreter: Sawodny, Michael-Wolfgang

(57) **Zusammenfassung**

Die Erfindung betrifft ein Verfahren zum Herstellen eines Festkörper-Lithiumionen-Leitermaterials, wobei die Verwendung von Wasser und/oder Wasserdampf als Medium beim Abkühlen oder Abschrecken des erhaltenen Zwischenprodukts und gegebenenfalls Zerkleinern des Zwischenprodukts und/oder beim Durchführen eines Kaltprozesses unter Erzeugen eines Pulvers in einem oder mehreren Zerkleinerungsschritten zu besonders vorteilhaften Herstellungsprodukten führt. Gegenstand der Erfindung ist auch das Festkörper-Lithiumionen-Leitermaterial, das eine Ionen-Leitfähigkeit von mindestens 10⁻⁵ S/cm bei Raumtemperatur aufweist sowie einen Wassergehalt < 1,0 Gew.-%. Die Erfindung bezieht sich ebenfalls auf die Verwendung des Festkörper-Lithiumionen-Leitermaterials in Form eines Pulvers in Batterien oder Akkumulatoren, bevorzugt Lithium-Batterien oder Lithium-Akkumulatoren, insbesondere Separatoren, Kathoden, Anoden oder Feststoff-Elektrolyten.

## Beschreibung

Die vorliegende Erfindung bezieht sich auf einen Festkörper-Lithiumionenleiter, auf ein Verfahren zur Herstellung des Festkörper-Lithiumionenleiters und dessen Verwendung.

### Hintergrund des Standes der Technik

In der Batterie-Technologie haben sich in den letzten Jahren die auf Lithiumionen basierenden Batteriesysteme zunehmend durchgesetzt. Diese zeichnen sich insbesondere durch ihre hohe elektrische Energiedichte und zu erwartende lange Haltbarkeit aus, so dass effizientere Batteriekonfigurationen möglich werden. Das hohe chemische Reaktionsvermögen, die geringe Masse der Lithiumionen sowie deren hohe Beweglichkeit spielen hierbei eine zentrale Rolle. Für die Entwicklung von Festkörper-Lithiumionenleitern besteht daher großes Interesse.

Bei Festkörperbatterien oder Festkörperakkumulatoren bestehen beide Elektroden und der Elektrolyt aus festem Material. Bei Festkörperbatterien, die auf Lithiumionen als Ladungsträgern basieren, handelt es sich mittlerweile in der Regel um Post-Lithiumionen-Batterien. Die Lithiumionenbatterien selbst zeichnen sich durch die Verwendung von Graphit als Anodenmaterial aus. In dieses können sich die Lithiumionen beim Laden der Batterie einlagern. Beim Entladen treten sie daraus wieder aus. Parallel werden Elektronen über den äußeren Stromkreis vom Graphit-Wirtssystem beim Laden aufgenommen und beim Entladen wieder abgegeben. Bei den Post-Lithiumionenbatterien kommt hingegen als Anodenmaterial häufig elementares Lithium zum Einsatz. Dieses ermöglicht gegenüber der Graphitanode eine signifikant höhere Energiespeicherdichte. In diesen Fällen liegen ebenfalls Lithiumbatterien vor. Der generelle Vorteil von Lithium-basierten Festkörperbatterien oder -akkumulatoren ist dabei, dass der Flüssigelektrolyt, der häufig feuergefährlich oder giftig ist, ersetzt und damit eine Verbesserung der Sicherheit von Lithium-basierten Batterien möglich wird.

Die Integration eines Festkörper-Lithiumionenleiters in die Batterie erfolgt in der Regel in Pulverform, wobei der Festkörperionenleiter entweder mit anderen Batteriekomponenten, wie z.B. Aktivmaterialien oder Polymeren, gemischt und optional gesintert oder mit weiteren Zusätzen gesintert oder verpresst wird. Hierbei treten jedoch häufig hohe Übergangswiderstände auf und es werden in den gesinterten Komponenten nur geringe Leitfähigkeiten erreicht.

Lange Zeit wurden Festkörper-Lithiumionen-Leitermaterialien auf Granatbasis Li₇La₃M₂O₁₂ (M = Zr, Sn, Hf), wie beispielsweise Lithiumlanthanzirkoniumoxid (LLZO) (M = Zr), als stabil gegenüber Wasser angesehen (R. Murugan et al., Angew. Chem. Int. Ed. Eng. 46 (2007) 7778-7781; N. Imanishi, Solid Electrolytes for Aqueous Lithium Air Batteries, 2014, 215-234). In der praktischen Anwendung zeigen Festkörper-Lithiumionen-Leiter allerdings den Nachteil, dass sie bereits bei der Herstellung mit der Feuchtigkeit und dem Kohlendioxid in der Luft reagieren. So beschreibt z. B. Yow et al. für Ta-dotiertes Li_{6,6}La₃Zr_{1,6}Ta_{0,4}O₁₂ (Z. F. Yow et al., Solid State lonics 292 (2016) 122-129) und auch eine Reihe von anderen Autoren für anderweitig dotierte LLZO-Varianten (Y. Jin et al., Journal of Power Sources 239 (2013) 326-331; Y. Wang et al., Journal of Power Sources 275 (2015) 612-620; C. Liu et al., Journal of Power Sources 282 (2015) 286-293; M. Nyman et al., Chem. Mater. 22 (2010) 5401-5410) sehr eingehend die Instabilität der LLZO-Verbindungen bei Kontakt mit Luftfeuchtigkeit oder bei Eintauchen in Wasser, die in einem Austausch von Lithiumionen (Li⁺) gegen Protonen (H⁺) resultiert. Dabei wurde das Verhalten des Materials sowohl in Form von Pellets als auch in Form von Pulver und in Abhängigkeit von der Zeit untersucht. Bei den verwendeten Pellets wurde nur die Oberflächenschicht angegriffen und der Austausch nach 7 Tagen Lagerung in Wasser betrug bis zu max. 8,8%. Beim Pulver fand unter vergleichbaren Bedingungen ein Austausch in einem hohen Maß von bis zu 53,4% statt. Insbesondere beim Pulver kann der Austausch etwas abgemildert werden, wenn anstelle von reinem Wasser eine 1 M LiOH-Lösung als Kontaktmedium verwendet wird. Nach 7 Tagen Lagerung findet hier ein Austausch von Li⁺ gegen H⁺ von nur noch 18,8% statt, wodurch dann aber eine unerwünschte LiOH-Phase im Pulver vorliegt. Der Austausch kann durch analytische Verfahren bestimmt werden. Ein mögliches analytisches Verfahren zur Bestimmung des Li⁺/H⁺-Austausch ist die Thermogravimetrie. Alternativ führt die Protoneneinlagerung des Materials zu einer kontinuierlichen Aufweitung der Gitterparameter, so dass das Phänomen auch mit Hilfe der Röntgendiffraktometrie analytisch erfasst werden kann.

Im Zuge des Li⁺/H⁺-Austauschs bildet sich Lithiumhydroxid. In einer Folgereaktion kann sich das angegriffene LLZO-Material - insbesondere bei längerer Lagerung an Luft - mit dem in der Atmosphäre vorhandenen CO₂ unter Bildung von Li₂CO₃ weiter umsetzen. Dieser Prozess wird zum Beispiel für Lithumgranate von Duan et al. beschrieben (H. Duan et al., Solid State lonics 318 (2018) 45-53). Das Lithiumkarbonat kann als isolierende Schicht auf der Oberfläche oder zwischen den Kristalliten wirken und führt so zu stark erhöhten Übergangswiderständen. Die Lithiumhydroxidbildung ist jedoch keine zwingende Voraussetzung für die Bildung von Lithiumcarbonat. Die Bildung kann auch unter trockenen Bedingungen erfolgen, wenn in der Atmosphäre CO₂ vorliegt.

Die auf dem Li⁺/H⁺-Austausch beruhende Degeneration führt zu drastischen Folgen im Hinblick auf die Funktionalität des Festkörper-Lithiumionen-Leitermaterials. Wie molekulardynamische (MD-)Rechnungen zeigen, mutiert das Material zu einem gemischten lonenleiter, wobei Li⁺-lonen- und Protonenleitung parallel ablaufen. Allerdings weisen diese unterschiedliche Aktivierungsenergien auf. Entsprechend überwiegt bei niedrigeren Temperaturen die Protonenleitfähigkeit, während der Anteil der Lithiumionenleitfähigkeit bei Temperaturen von etwas über 900 °C bei rund 37% liegt.

Eine Möglichkeit, Wasser und CO₂ von einem entsprechend beladenen Festkörper-Lithiumionen-Leitermaterial wieder zu entfernen, bietet prinzipiell eine Hochtemperaturbehandlung, wie sie zum Beispiel in der JP 2013-219017 A beschrieben wird. Dies erfordert aber relativ hohe Temperaturen von > 650 °C, bei denen es bereits zum Lithiumverlust durch Verdampfung und im Fall von Pulver zu einem Versintern kommen kann. Zudem demonstriert die JP 2013-219017 A die Hochtemperaturbehandlung nur an gesinterten Pellets. Pulver sind lediglich als theoretische Möglichkeit genannt und hinsichtlich ihrer Eigenschaften nicht weiter charakterisiert. Ob und wie das Verfahren an Pulvern durchgeführt werden kann, ist nicht offenbart und nicht ersichtlich.

In der Veröffentlichung von Yow et al. (2016, a.a.O.) führen die Autoren explizit aus, dass sie das mit Wasser und gegebenenfalls zusätzlich mit CO₂ in Kontakt gebrachte Ta-dotierte LLZO-Material weder als Sinterpellet noch als Pulver einer weiteren Temperaturbehandlung aussetzten, da ein hohes Risiko der Zersetzung und der damit einhergehend zu erwartenden starken Veränderung der Leitfähigkeit resultiert. Für die Gefahr der Zersetzung und der damit einhergehend zu erwartenden starken Veränderung der Leitfähigkeit sprechen auch die von Kang et al. (S. G. Kang et al., J. Phys. Chem. C118 (2014) 17402-17406) getroffenen thermodynamischen Betrachtungen auf Basis von Dichtefunktionaltheorie-Rechnungen, die einen Zerfall von granatbasierten Festkörper-Ionen-Leitermaterialien entsprechend der folgenden Reaktionsgleichungen (1) und (2) erwarten lassen:

| | | |
|---|---|---|
| 2 Li₇La₃M₂O₁₂ + 7 H₂O → 14 LiOH + 3 La₂O₃ + 4 MO₂ | (M = Zr, Sn, Hf) | (1) |
| 2 Li₇La₃M₂O₁₂ + 7 CO₂ → 7 Li₂CO₃ + 3 La₂O₃ + 4 MO₂ | (M = Zr, Sn, Hf) | (2) |

Insbesondere bei der Verwendung von pulverförmigen lonenleitern stellen die oben beschriebenen Reaktionen (1) und (2), die bei Kontakt mit Wasser auftreten, beim nachträglichen Erhitzen ein Problem dar, da hier eine besonders hohe Oberfläche vorliegt. Die mangelnde Reproduzierbarkeit der Ergebnisse wird damit in Zusammenhang gebracht und im Extremfall können diese Reaktionen und die daraus folgende Lithium-Verarmung im Material zu einem erheblichen Verlust an Leitfähigkeit führen.

Im Fall der Lithiumgranate muss es dabei nicht unbedingt - wie in den oben beschriebenen molekulardynamischen (MD-)Rechnungen ermittelt - zu einer vollständigen Zersetzung in die Einzelkomponenten kommen. Häufig tritt hier aber zumindest die Bildung von Lithiummangelphasen, wie z. B. von Pyrochlor La₂M₂O₇ (M = Zr, Sn, Hf), auf, die zu einer starken Beeinträchtigung der Lithiumionen-Leitfähigkeit führen. In anderen Fällen, wie z.B. bei den Lithiumaluminiumtitanphosphat-basierten Festkörper-Lithiumionen-Leitermaterialien (LATP: Li(Ti, Al)₂(PO₄)₃), können zu hohe Temperaturen zu einer Amorphisierung der Kristallphase und dabei zu einer Verschlechterung der Leitfähigkeit führen. Gegebenenfalls kann es zuvor zu einer Al-Verarmung in der Kristallphase und zur Bildung von AlPO₄ kommen, was ebenfalls mit einem Leitfähigkeitsverlust verbunden sein kann.

Auch wurden bereits Variationen von Zusammensetzungen, die weniger empfindlich gegenüber Reaktionen mit der umgebenden Luft sind, vorgeschlagen (siehe z.B. JP 2017-061397 A). Es kann jedoch erwartet werden, dass gerade Lithiumionenleiter, die eine besonders hohe Leitfähigkeit aufweisen, aufgrund der damit verbundenen hohen Lithiummobilität eine Tendenz zur Reaktion mit Luft und insbesondere mit der darin enthaltenen Feuchtigkeit haben. Dies gilt besonders für Materialien mit hohem Lithiumgehalt.

Beim LATP handelt es sich ähnlich - wie beim Hydroxylapatit, der unsere Knochen aufbaut - um Orthophosphatverbindungen, d. h. Salze der Phosphorsäure - nachdem diese vollständig aus dem P₂O₅ durch Abreaktion mit Wasser gebildet und in einem weiteren Schritt mit einer Lauge/einem basischen Material (teil-)neutralisiert wurde. Solche - häufig schwerlöslichen - Salzverbindungen nehmen bekanntermaßen bis zu einem gewissen Maße Wasser in die Solvathüllen der Kationen oder Gitterstruktur des Kristalls auf. Die Aufnahme von Wasser in die Solvathülle oder Einlagerung in die Gitterstruktur ist aber für die erfindungsgemäßen Lithiumionen-Leitermaterialien gänzlich unerwünscht.

Weiterhin zeigen Gläser mit einem hohen Alkali-Gehalt, insbesondere Li-Gehalt, normalerweise eine hohe Tendenz zur Auslaugung dieser Ionen aus der Glasmatrix.

Demnach wäre zu erwarten, dass ein Verfahren, welches Wasser oder Wasserdampf als ein formgebendes Medium bzw. Kontaktmedium einsetzt, für die Herstellung von phosphatbasierten Festkörper-Lithiumionen-Leitermaterialien, insbesondere Lithiumaluminiumtitanphosphat LATP, nicht in Frage kommen kann.

Die vorliegende Erfindung wurde daher in völliger Abkehr von gängigen Konzepten und Vorstellungen aus dem Stand der Technik entwickelt.

Der vorliegenden Erfindung liegt die Aufgabe zugrunde, die Nachteile aus dem Stand der Technik zu überwinden und ein Festkörper-Lithiumionen-Leitermaterial bereitzustellen, das über ausreichende Wasserbeständigkeit verfügt, um unter Verwendung von Wasser und/oder Wasserdampf herstellbar zu sein, aber dennoch die erforderliche Funktionalität als Lithiumionen-Leiter in Form einer ausreichend hohen Leitfähigkeit zeigt.

### Beschreibung der Erfindung

Die vorstehend geschilderte Aufgabe wird erfindungsgemäß durch die Merkmale der unabhängigen Ansprüche gelöst. Die Unteransprüche stellen bevorzugte Ausgestaltungen der Erfindung dar.

In überraschender Weise wurde festgestellt, dass die Herstellung von Festkörper-Lithiumionen-Leitermaterialien unter Verwendung von Wasser und/oder Wasserdampf als Medium im Heißprozess und/oder Kaltprozess zu besonders vorteilhaften Herstellungsprodukten führt. Dies ist völlig unerwartet, da ausgehend von den im Stand der Technik beschriebenen Erfahrungen die Prozessierung von Festkörper-Lithiumionen-Leitermaterialien in Wasser als Medium nicht nur als nachteilig angesehen wird, sondern im Hinblick auf die Stabilität des Materials, die Phasenreinheit und Einstellung der optimalen Kristallmodifikation sowie dessen Funktionalität in Form der Lithiumionen-Leitfähigkeit überhaupt nicht durchführbar sein soll.

Die vorliegende Erfindung bezieht sich auf ein Verfahren zum Herstellen eines Festkörper-Lithiumionen-Leitermaterials mit den folgenden Schritten:
(1) Bereitstellen von Ausgangsprodukten eines Festkörper-Lithiumionen-Leitermaterials;
(2) Durchführen mindestens eines Heißprozesses mit den Ausgangsprodukten des Festkörper-Lithiumionen-Leitermaterials, umfassend
   - ein Schmelzverfahren,
   - ein Sinterverfahren,
   - ein Keramisierungsverfahren,
   - ein Calcinieren einer Sol-Gel-Vorstufe oder
   - eine Bottom-up-Synthese im Pulsationsreaktor;
(3) Abkühlen oder Abschrecken des erhaltenen heißen Zwischenprodukts; und
(4) Durchführen eines Kaltprozesses unter Erzeugen eines Pulvers in einem oder mehreren Zerkleinerungsschritten;
wobei in Schritt (3) und/oder Schritt (4) das jeweilige Zwischenprodukt mit Wasser und/oder Wasserdampf in Kontakt gebracht und anschließend getrocknet wird.

Nachfolgend soll das erfindungsgemäße Verfahren im Einzelnen erläutert werden:
Mit dem Verfahren der Erfindung werden in mehreren Schritten Festkörper-Lithiumionen-Leitermaterialien hergestellt.

In Schritt (1) des erfindungsgemäßen Verfahrens werden die Ausgangsprodukte eines Festkörper-Lithiumionen-Leitermaterials bereitgestellt. Die Erfindung ist in dieser Hinsicht nicht weiter beschränkt, sofern das Festkörper-Lithiumionen-Leitermaterialien über ein Schmelz-, Sinter-, Keramisierungsverfahren, Calcinieren einer Sol-Gel-Vorstufe oder eine Bottom-up-Synthese im Pulsationsreaktor herstellbar ist. Dem Fachmann sind derartige Festkörper-Lithiumionen-Leitermaterialien bekannt. Dies sind beispielweise Festkörper-Lithiumionen-Leitermaterialien auf Basis einer NASICON-Struktur. Die NASICON-Struktur ist eine Struktur, die aus eckenverknüpften PO₄-Tetraedern und Oktaedern, wie beispielsweise TiO₆- oder GeO₆-Oktaedern, aufgebaut ist. Die NaSICON-Struktur ermöglicht eine leichte Migration von Li-Ionen durch das Kristallgitter. Die Festkörper-Lithiumionen-Leitermaterialien auf Basis einer NASICON-Struktur sind bevorzugt ausgewählt aus Materialien auf Basis von Lithiumaluminiumtitanphosphat (LATP) und/oder auf Basis von Lithiumaluminiumgermaniumphosphat (LAGP).

Andere Festkörper-Lithiumionen-Leitermaterialien, die hergestellt werden können, sind solche, die auf einer Granatstruktur basieren. Diese sind bevorzugt ausgewählt aus Materialien auf Basis von Lithiumlanthanzirkoniumoxid LLZO.

Die Formulierung "auf Basis von" oder "basieren auf", wie beispielweise auf Basis von Lithiumaluminiumtitanphosphat (LATP), bedeutet, dass jeweils die bekannte Grundstruktur vorliegt, wobei jedoch aus dem Stand der Technik bekannte Abweichungen von der Grundstruktur vorliegen können. Dies können beispielweise zusätzlich Dotierungen mit anderen Elementen sein, wie beispielsweise Tantal, Aluminium, Niob, Zirkon, Gallium, Yttrium, Silicium, Germanium, Tellur, Chrom, Eisen, Scandium, Bor, Seltene Erden, Halogenide, Alkali- und/oder Erdalkalimetalle. Diese Dotierungen sind aus dem Stand der Technik bekannt. Der Begriff umfasst daher sämtliche unter den allgemeinen Oberbegriff fallende Verbindungen.

Im erfindungsgemäßen Verfahren werden zunächst die Ausgangsprodukte für das Festkörper-Lithiumionen-Leitermaterial bereitgestellt, d.h. die entsprechenden Oxide, Hydroxide, Carbonate, Sulfate oder auch andere Salze, zur Verfügung gestellt.

Bei den Ausgangsprodukten eines Festkörper-Lithiumionen-Leitermaterials, das auf Basis einer Granatstruktur kristallisiert, wird bevorzugt eine Materialzusammensetzung ausgewählt, die im Vergleich zu einer stöchiometrischen Zusammensetzung einen Überschuss an Lithium aufweist. Der Überschuss an Lithium liegt molar bezogen auf die Formeleinheit des stöchiometrischen Kristalls bevorzugt bei 2% bis 100%, besonders bevorzugt bei 2% bis 25%.

Im Fall von Festkörper-Lithiumionen-Leitermaterialien, basierend auf einer NASICON-Struktur, kann das erfindungsgemäße Verfahren in der Regel ohne Zusatz von Lithium mit den unveränderten Ausgangsprodukten des Rohmaterials durchgeführt werden, d.h. ohne Li-Überschuss.

Die bereitgestellten Ausgangsprodukte werden dann in Schritt (2) einem Heißprozess unterzogen, umfassend ein Schmelzverfahren, ein Sinterverfahren, ein Keramisierungsverfahren, Calcinieren einer Sol-Gel-Vorstufe oder eine Bottom-up-Synthese im Pulsationsreaktor.

Der Heißprozess kann beispielsweise ein Schmelzen der Ausgangsprodukte umfassen. Alternativ kann auch ein Sintern, insbesondere Festkörpersintern, bei einer Temperatur, die unterhalb der Schmelztemperatur der Ausgangsprodukte liegt, eingesetzt werden.

Eine Keramisierung findet vorzugsweise als Zwischenschritt statt, der beispielsweise bei LATP optional ist.

Ein weiterer Heißprozess ist das Calcinieren einer Sol-Gel-Vorstufe. Zunächst erfolgt hierbei das Herstellen einer Vorstufe in einem Sol-Gel-Verfahren auf nasschemischem Wege in der Regel bei relativ niedrigen Temperaturen. Bei einem Sol-Gel-Verfahren fällt nach Entfernung der Lösemittel durch Trocknung eine Vorstufe an, die durch Calcinieren als Heißprozessschritt in die gewünschte Materialform überführt wird.

Bei einer Bottom-up-Synthese im Pulsationsreaktor handelt es sich ebenfalls um einen dem Fachmann bekannten Heißprozess, da die Synthesereaktion in einem pulsierenden Heißgasstrom erfolgt. Hierbei kommt üblicherweise das bei einer Verbrennungsreaktion entstehende Abgas zum Einsatz.

Der gesamte Heißprozess kann einen oder mehrere Schritte/Teilprozesse umfassen. An den/die angegebenen Heißprozess(e) können sich auch ein oder mehrere Nachbehandlungsschritte anschließen, die dann ebenfalls Heißprozesse darstellen. Die Heißprozesse können sich jeweils direkt aneinander anschließen, ohne andere Zwischenschritte, d. h. es erfolgen ein oder mehrere Heißprozesse nacheinander. Zwischen den einzelnen Heißprozessen kann das Zwischenprodukt jeweils auf Raumtemperatur abgekühlt werden. Dies ist aber nicht in jedem Fall erforderlich. Die Nachbehandlungen, beispielweise in Form eines Temperns, bevorzugt in einem Ofen, mit einem definierten Temperatur-Zeit-Programm für das Aufheizen, Halten und Abkühlen, jeweils gegebenenfalls mit Zwischenhalteschritten, dienen zum Einstellen der gewünschten Kristallmodifikation und/oder Kristallitgröße.

Insgesamt dient der Heißprozess zur Herstellung des gewünschten Mehrstoffsystems und kann beispielweise folgende Verfahren umfassen:
- ein Schmelzverfahren unter Schmelzen der bereitgestellten zwei oder mehreren Ausgangsprodukte zu einem Glas und Überführen des Glases in eine Glaskeramik durch geeignetes Abkühlen und gegebenenfalls nach dem Abkühlen
- Durchführen eines weiteren Keramisierungsschritts in Form eines Temperns, beispielweise in einem Ofen, mit einem definierten Temperatur-Zeit-Programm für das Aufheizen, Halten und Abkühlen, jeweils gegebenenfalls mit Zwischenhalteschritten, zum Einstellen der gewünschten Kristallmodifikation und/oder Kristallitgröße;
- ein Sinterverfahren zum Sintern der bereitgestellten zwei oder mehreren Ausgangsprodukte bei hohen Temperaturen, aber unterhalb der Schmelztemperatur der Ausgangsprodukte, im Rahmen einer Festkörperreaktion;
- ein Calcinieren einer Sol-Gel-Vorstufe, das ein Calcinieren einer in einem Sol-Gel-Verfahren hergestellten Vorstufe umfasst; oder
- eine Bottom-up-Synthese im Pulsationsreaktor und optional anschließendes Nachcalcinieren zum Einstellen der Kristallmodifikation und/oder Kristallitgröße.

An den Heißprozess gemäß Schritt (2) des Verfahrens schließt sich in Schritt (3) ein Abkühlen oder Abschrecken des erhaltenen heißen Zwischenprodukts an. Hierbei kann das Zwischenprodukt mit Wasser und/oder Wasserdampf in Kontakt gebracht und anschließend getrocknet werden. Das Abkühlen oder Abschrecken kann auch ohne Wasser oder Wasserdampf erfolgen. Im Allgemeinen kann das Abkühlen oder Abschrecken beispielweise ein freies oder gesteuertes Abkühlen oder Abschrecken (Quenchen) auf Raumtemperatur darstellen. Das heiße Zwischenprodukt kann beispielweise dadurch abgekühlt werden, dass es mit kaltem Wasser, kalter Luft oder mit kalten, gut wärmeleitenden Werkstoffen in Kontakt gebracht und anschließend getrocknet wird. Die Abkühlung oder das Abschrecken kann auch auf andere, dem Fachmann bekannte Weise erfolgen.

Gemäß einer bevorzugten Ausführungsform der Erfindung wird in Schritt (3) beim Abkühlen oder Abschrecken des erhaltenen heißen Zwischenprodukts gleichzeitig das Zwischenprodukt zerkleinert. Das Zerkleinern umfasst beispielweise das Zerstäuben des heißen Zwischenprodukts in Tröpfchen oder Vereinzeln des heißen Zwischenprodukts in Partikel, beispielsweise Grobpartikel. Das heiße Zwischenprodukt kann während des Durchführens von Schritt (3) in Kontakt mit Wasser und/oder Wasserdampf kommen. Schritt (3) stellt gemäß dieser Ausführungsform daher einen Heißformgebungsprozess dar.

Schritt (3) als Heißformgebungsprozess in Form eines Zerstäubens oder Frittens dient dem Abkühlen bzw. Abschrecken des Materials unter Bildung eines Zwischenprodukts mit möglichst geringen Kristallphasen - und entsprechend möglichst hohem amorphem oder Glasphasenanteil. Hierdurch wird der Gefahr einer unkontrollierten Bildung unerwünschter Kristallphasen infolge eines unkontrollierten Temperatur-Zeit-Verlaufs beim Abkühlen vorgebeugt.

Weiterhin ist es durch den Schritt (3) als Heißformgebungsprozess vorteilhaft, wenn ein Zwischenprodukt erzeugt wird, dass sich in den nachgeschalteten Zerkleinerungsprozessen als besonders günstig handhabbar erweist. So sind in einem Zerstäubungs- oder Frittenprozess gebildete Partikel oder auch durch Kühlung auf einer Walzmaschine erzeugte Glasbänder - ein alternatives Abkühl- bzw. Abschreck-Verfahren ohne Wasserkontakt - deutlich besser zerkleinerbar als große monolithische Blöcke.

Gemäß einer bevorzugten Ausführungsform wird das erhaltene heiße, bevorzugt noch flüssige, Zwischenprodukt im Schritt (3) abgekühlt oder abgeschreckt und gleichzeitig zerkleinert und hierbei in Kontakt mit Wasser und/oder Wasserdampf gebracht. Besonders bevorzugt erfolgt dies, indem das flüssige Zwischenprodukt unter Verwendung des Zerstäubungsmediums Wasser in Tröpfchen zerstäubt wird. Das Zerstäubungsmedium in Form von Wasser kann als Wasserstrahl, z.B. in einer Wasserrutsche oder über eine Düse, geführt werden.

Bei einer Wasserrutsche wird das erhaltene flüssige Zwischenprodukt, das über einen Schmelzprozess gemäß Schritt (2) des erfindungsgemäßen Verfahrens hergestellt wurde, in einem Strahl über eine Schmelzzuführung auf eine "Wasserrutsche" geleitet. Die Wasserrutsche dient dazu, die Tröpfchen in Wasser abzuschrecken oder zu kühlen. Wenn die Schmelze auf den strömenden Wasserfilm trifft, wird der Schmelzstrahl in feine Tröpfchen zerteilt.

Die Viskosität des eingesetzten flüssigen Zwischenprodukts kann beispielweise im Bereich von 0,1 bis 1 dPa, bei einer Temperatur von 1450 °C bis 1600 °C vorliegen. Auf einer Wasserrutsche strömt Wasser mit hoher Geschwindigkeit, beispielsweise mit einem Durchsatz von 0,1 bis 3 m³/min, besonders bevorzugt 1,7 m³/min, über eine geneigte Rinne, bevorzugt Edelstahlrinne. Der Neigungswinkel der Wasserrutsehe kann hierbei beliebig eingestellt werden, wobei 10 - 75° bevorzugt sind, ganz besonders bevorzugt sind 45°.

Bei der Wasserrutsche ist bevorzugt die komplette Wandung der Rinne am Boden mit einem Wasserfilm bedeckt. Die erzeugten Tröpfchen bilden durch Kontakt mit dem Wasserfilm ein Dampfpolster aus, das einen weiteren Kontakt der Tröpfchen mit dem Wasser verhindert. Die Wasserrutsche unterscheidet sich von einem Wasserbad dadurch, dass es unter Verwendung einer Wasserrutsche gelingt, den Tröpfchendurchmesser des Materials in gezielter Weise einzustellen. Bevorzugt kann in Abhängigkeit vom Abstand der Schmelzzuführung zur Wasserrutsche, dem Neigungswinkel der Wasserrutsche, beispielweise im Bereich von 10 - 75°, bevorzugt 45°, und von der eingestellten Wasserdurchflussmenge, beispielsweise im Bereich von 0,1-3 m³/min, bevorzugt 1,7 m³/min, der Tröpfchendurchmesser eingestellt werden. Bevorzugte Tröpfchendurchmesser liegen bei kleiner als 20 mm, z.B. 19,99 mm oder kleiner, bevorzugt kleiner als 10 mm, z.B. 9,99 mm oder kleiner, besonders bevorzugt im Bereich von 0,5 - 1 mm.

Die Tröpfchen haben damit keinen direkten Kontakt zum darunterliegenden Material der Wasserrutsche. Die Tropfen bewegen sich beispielweise in einer Flugbahn auf ein Auffanggefäß zu oder sie werden vom Wasserstrahl mitgerissen und in einem geeigneten Auffangbehälter aufgefangen oder aufgenommen. Unmittelbar nach der Zerteilung des Schmelzstrahls in Tröpfchen oder im Zeitraum ihrer Flugbewegung erstarren die Tröpfchen. Beim Auftreffen im Auffangbehälter sind sie bereits fest, jedoch noch sehr heiß (> 700 °C), und damit in der Regel oberhalb der mit einer DTA-Messung (Differentiale Thermoanalyse) bestimmten Keramisierungstemperatur. Bevorzugt kann das Auffanggefäß gekühlt werden. Dadurch werden die festen Partikel beim Eintauchen so schnell abgekühlt, dass keine oder nur geringfügige Kristallisation eintritt. Somit erhält man ein nahezu komplett amorphes Glas(keramik)granulat.

Die Verwendung einer Wasserrutsche hat große Vorteile: So kann das heiße flüssige Zwischenprodukt, das aus einem Schmelzverfahren erhalten wird, unmittelbar, ohne Zwischenschritt, in Partikel zerkleinert werden. Die Partikelgröße ist gezielt einstellbar, so dass in dem sich anschließenden Kaltprozess die Zahl der zusätzlichen Zerkleinerungsschritte und die hierfür benötigte Energie deutlich reduziert werden können. Insgesamt wird das Verfahren hierdurch vereinfacht und wirtschaftlicher. Dies wirkt sich insbesondere bei einer großtechnischen Produktion aus.

Alternativ kann der Wasserstrahl auch ohne Verwendung einer Rutsche z.B. mittels einer Düse erzeugt werden und direkt auf den schmelzflüssigen Strahl des Zwischenproduktes gelenkt werden.

Durch die Verwendung von Wasser als Zerstäubungsmedium kommen die Tröpfchen nur in untergeordnetem Maße mit Wasser in direkten Kontakt, da das Wasserdampfpolster diese abfängt. Die Tatsache, dass unmittelbar beim Aufeinandertreffen von Wasser und Schmelze ein Dampfpolster zwischen beiden Medien liegt, bewirkt, dass eine mögliche Auslaugung von Li-Ionen an dieser Stelle des Prozesses unterbunden oder zumindest zu gering wie möglich gehalten wird.

Ein Abschrecken von Glasschmelzen in Wasser - wie in einer Wasserrutsche - ist aus dem Stand der Technik bereits bekannt geworden, wurde jedoch bislang in völlig anderen Bereichen verwendet, wie beispielweise bei der Granulatherstellung von Hochofenschlacken oder auch bei Polymeren. Für Lithiumionen-Leitermaterialien wurde diese Technologie bislang nicht eingesetzt.

So wird ein Abschrecken von Schmelzen beispielsweise zur Herstellung von Granulaten aus Hochofenschlacken eingesetzt, die als Nebenprodukt in der Stahlindustrie auftreten. (Journal of Non Cryst. Solids 499 (2018) 344-349 oder EP 1284299). Dabei werden die flüssigen Schlacken mit Hilfe eines Wasserstrahls schnell abgekühlt und granuliert, was zur glasartigen Erstarrung und gleichzeitiger Zerkleinerung führt. In völlig überraschender Art und Weise und in Abkehr von gängigen Vorstellungen und Konzepten aus dem Stand der Technik kann dieses Vorgehen zur Herstellung von Lithiumionenleitern eingesetzt werden, wobei das zu erwartende nachteilige Li-Auswaschen und damit verbundene nachteilige Effekte auf die lonenleitfähigkeit nicht erhalten werden. Andere nachteilige Wirkungen durch die Verwendung von Wasser konnten ebenfalls nicht festgestellt werden.

Das übliche Verfahren zur Herstellung von Lithiumionenleitern über ein Schmelzverfahren umfasst ein schnelles Abschrecken über Kontakt mit kalten, gut wärmeleitenden, beispielsweise metallischen Werkstoffen, wie Walzen, Gussformen und dergleichen. Die Verwendung metallischer Werkstoffe birgt jedoch das Risiko einer Kontamination des ionenleitenden Materials, das die elektr(on)ische Leitfähigkeit nachteilig beeinflussen könnte. Gemeint ist damit, dass die elektr(on)ische Leitfähigkeit in ionenleitenden Materialien möglichst gering sein soll. Metallischer Abrieb könnte diese in unerwünschtem Maße erhöhen. In der Batterieanwendung soll der elektrische Strom über den äußeren Stromkreis fließen, d. h. dem Verbraucher in Form eines Geräts oder einer Anlage zur Verfügung stehen, und nicht innerhalb der Batterie. Dort soll die Ionenleitung vorherrschen.

Erfindungsgemäß ist daher das Abschrecken und Zerkleinern unter Verwendung von Wasser, insbesondere unter Verwendung eines Wasserstrahls, z.B. eingebracht über eine Zerstäubungsdüse oder geführt in einer Wasserrutsche oder dergleichen, zur Herstellung eines Lithiumionenleiters besonders bevorzugt.

Sofern das Zwischenprodukt im Schritt (3) in Kontakt mit Wasser und/oder Wasserdampf gebracht wurde, erfolgt bevorzugt ein Trocknen des Zwischenprodukts. Dies kann in einer dem Fachmann bekannten Art und Weise durchgeführt werden.

Es hat sich als besonders vorteilhaft herausgestellt, wenn der Abkühl- oder Abschreckvorgang des heißen Zwischenprodukts in Schritt (3), bevorzugt unter Formgebung, in oder mit Wasser und/oder Wasserdampf durchgeführt wird. Die Verwendung von Wasser und/oder Wasserdampf hat zahlreiche Vorteile: Der Wasserstrahl bzw. der Wasserdampf kann als kontinuierlicher Schmelzfluss nach Erhalt der Schmelze eingesetzt werden und dient als Medium, um unmittelbar nach dem Austritt der Schmelze aus dem Schmelztiegel diese in kleine Partikel zu zerstäuben. Diese Partikelbildung erleichtert die anschließende schnelle Abkühlung aufgrund einer Vergrößerung der Oberfläche sowie die nachfolgenden weiteren Zerkleinerungsschritte. Nach einer Zerstäubung ist es vorteilhaft, die Partikel in Wasser zu überführen, um eine möglichst schnelle Abkühlung und damit Aushärtung zu erreichen. Wasser ist zudem besonders kostengünstig und kann daher auch in großtechnischen Produktionen ohne Weiteres zum Einsatz kommen.

Im erfindungsgemäßen Verfahren wird ein Formgebungsprozess während des Heißprozesses und ein Abkühl- oder Abschreckvorgang nach dem Heißprozess bevorzugt so gewählt, dass sie auf die nachfolgenden Kaltprozessschritte optimal vorbereiten und die Produkteigenschaften möglichst nur positiv, aber nicht negativ, beeinflussen. Unter "optimal vorbereiten" wird dabei verstanden, dass der oder die Schritte des Heißprozesses derart durchgeführt werden, dass einzelne Schritte der Kaltprozesskette entfallen oder mehr oder weniger deutlich vereinfacht werden können. Dies bezieht sich zum Beispiel auf eine Herabsetzung der benötigten Mahldauer oder der einzubringenden Mahlenergie. Beispielweise könnte dies durch geschicktes Abschleudern oder Zerstäuben der Schmelze erreicht werden, wodurch hinreichend kleine Frittenpartikeln erzeugt werden, die direkt einem Feinmahlprozess als Aufgabegut zugeführt werden könnten, ohne dass ein separater, gegebenenfalls mehrstufiger Grobzerkleinerungsprozess, z. B. Aufbrechen im Backenbrecher mit anschließender Grobmahlung auf einer Kugel- oder Scheibenmühle, notwendig ist. Eine weitere Möglichkeit wäre es, durch besonders schnelles Abschrecken beispielsweise Spannungen ins glasige Material einzubringen, so dass das Aufbrechen des Aufgabeguts in einem nachgeschalteten Zerkleinerungsprozess durch diese erleichtert wird. Dieses Vorgehen ist erfindungsgemäß besonders vorteilhaft.

In einem sich an Schritt (3) des erfindungsgemäßen Verfahrens anschließenden optionalen Zwischenschritt, der vor Schritt (4) erfolgt, kann das abgekühlte Zwischenprodukt einem Tempern, beispielsweise in einem Ofen, unterzogen werden. Hierzu wird zum Einstellen der gewünschten Kristallstruktur mit einem definierten Temperatur-Zeit-Programm für das Aufheizen, Halten und Abkühlen, jeweils gegebenenfalls mit Zwischenhalteschritten, getempert. Das definierte Temperatur-Zeit-Programm hängt u. a. von den ausgewählten Ausgangsprodukten, deren Menge, dem erhaltenen Massivmaterial, dem gewünschten Anteil sowie der Art der Kristallphase, der Kristallgröße, der Gefüge-/Mikrostruktur sowie der geometrischen Größe und Homogenität des Ausgangsmaterials in dessen jeweiliger Darreichungsform (z. B. Frittenpartikeln, Ribbons, etc.) ab. Die für die Erzeugung einer gewünschten Kristallphase mindestens benötigte Temperatur ergibt sich beispielweise aus der Lage des mit Hilfe einer Differentialthermoanalyse bestimmten Kristallisationspeaks. Neben dem Temperatur-Zeit-Programm spielen außerdem die bei der Temperung gewählte Atmosphäre, d. h. das hierbei verwendete Prozessgas (z. B. Luft, Sauerstoff, Inertgase, wie Stickstoff oder Argon, decarbonisierte Luft) sowie die eingestellte Feuchtigkeit, eine Rolle. Der Fachmann kann hiefür auf Wissen aus dem Stand der Technik zurückgreifen. Das Tempern kann beispielweise ein Calcinieren, Keramisieren, Sintern oder einen anderen Heißprozess darstellen.

Zur Einstellung des gewünschten Kristallphasenanteils und Phasenzusammensetzung kann ein zusätzlicher Temperschritt (Wiederholung des optionalen Zwischenschritts) durchgeführt werden. Dies hängt von jedem Einzelfall ab.

Ein weiterer Vorteil des optionalen Zwischenschritts neben der Einstellung des gewünschten Kristallphasenanteils und Phasenzusammensetzung ist, dass durch das Tempern noch vorhandenes Restwasser weitestgehend aus dem Material ausgetrieben wird.

Das nach Schritt (3) bzw. nach Durchführen des optionalen Zwischenschritts, aber vor Durchführung von Schritt (4), erhaltene Zwischenprodukt kann beispielweise in einem glas- oder glaskeramikartigen Zustand erstarren, ist also zu einem hohen Anteil röntgenamorph. Der genaue Kristallanteil sowie gegebenenfalls der Anteil unterschiedlicher Kristallphasen sind beispielsweise über die Kühlhistorie, d. h. Wahl der Prozessbedingungen, einstellbar. Je nach Einstellung der Prozessbedingungen weist das Zwischenprodukt daher einen mehr oder weniger hohen Anteil an Kristallphase auf.

Je nach Kombination aus Heißprozessen und Abkühlvorgängen fällt das Rohprodukt in Form eines massiven Körpers, von Ribbons, einer Fritte, eines Granulats oder von Grobpartikeln als Zwischenstufe an. Die Partikel weisen häufig Risse oder zumindest innere Spannungen auf, was für den sich anschließenden Kaltprozess besonders vorteilhaft ist, da sich die Partikel hierdurch einfacher und mit weniger Mahlenergie zerkleinern lassen.

Die Verfahrensschritte des Heißprozesses können sich bevorzugt unmittelbar ohne zusätzliche Verfahrensschritte aneinander anschließen.

An den Schritt (3), dem gegebenenfalls der optionale Zwischenschritt in Form einer Temperung folgt, schließt sich ein Kaltprozess gemäß Schritt (4) an, der ebenfalls einen oder mehrere Schritte in Form von Zerkleinerungsprozessen zur Herstellung des Pulvers als eigentliche Verwendungsform umfasst.

Im Kaltprozess von Schritt (4) wird aus dem erhaltenen Zwischenprodukt in einem oder mehreren Zerkleinerungsschritten ein Pulver erzeugt, wobei bevorzugt in mindestens einem Zerkleinerungsschritt mit Wasser und/oder Wasserdampf in Kontakt gebracht wird. In dem nachgeschalteten Kaltprozess wird somit mit einem oder mehreren Zerkleinerungsschritten das Rohprodukt in die Pulverform mit der gewünschten Teilchengröße und Korngrößenverteilung überführt.

Bevorzugt umfasst der Kaltprozess einen oder mehrere der folgenden Schritte:
- Zerkleinern mit Hammer und Meißel;
- Zerkleinern mit Walzen- und/oder Backenbrecher,
- Zerkleinern mit Kugel- und/oder Hammermühlen;
- Zerkleinern mit Kugel-, Prall- und/oder Planetenmühlen;
- Zerkleinern mit Scheiben-Schwingmühlen,
- Zerkleinern mit Gegenstrahl-, Spiralstrahl- und/oder Dampfstrahlmühlen
- Zerkleinern mit Trocken- und/oder Nasskugelmühlen;
- Zerkleinern mit Trocken- und/oder Nassrührwerkskugelmühlen;
- Zerkleinern durch Hochenergiemahlen in hochkinetischen Rotorkugelmühlen.

In diesem Zusammenhang soll erwähnt werden, dass Mühlen auf drei Arten klassifiziert werden können: Art des Antriebs, Produkt und Funktion. Die obigen Mühlen sind hier nach Funktion klassifiziert.

Im Stand der Technik werden die Kaltprozesse, d. h. die Zerkleinerungsschritte, regelmäßig unter trockenen Bedingungen durchgeführt, was jedoch nicht immer zweckmäßig ist. In unerwarteter Weise ist nun eine Nassfeinmahlung der Festkörper-Lithiumionen-Leitermaterialien auf geeignete kleine Partikelgrößen möglich. So kann die Mahlung auf Partikelgrößen im unteren einstelligen µm- bzw. sub-µm-Bereich in manchen Fällen nur in einem Feinmahlprozess in einem flüssigen Medium, beispielweise auf einer Rührwerkskugelmühle, erfolgen. Dies ist erfindungsgemäß nun für die Festkörper-Lithiumionen-Leitermaterialien möglich. Unter wirtschaftlichen Gesichtspunkten ist zudem die Verwendung von flüssigem Mahlmedium, beispielweise Wasser, besonders zweckmäßig. Alternativ kann auch eine Gegenstrahlmühle verwendet werden, bei der überhitzter Wasserdampf als Prozessgas zum Einsatz kommt.

Die Verwendung von Wasser im Kaltprozess als Prozessmedium - sei es in flüssiger Form, sei es als Dampf, insbesondere überhitzter Dampf - zur Herstellung eines Festkörper-Lithiumionen-Leiters in der Verwendungsform als Pulver ist daher zum Erreichen der gewünschten Partikelgröße von großem Vorteil. Zudem ist Wasser und Wasserdampf unproblematisch in der Handhabung, nicht toxisch, auch bei großindustriellem Einsatz in großen Mengen einsetzbar und aus wirtschaftlicher Hinsicht besonders kostengünstig und wiederverwendbar. Zudem gelingt es unter Verwendung von Wasser die Partikelgröße sehr klein einzustellen, was mit anderen Verfahren nicht oder nur sehr schwierig umzusetzen ist. Die Verwendung von Wasser und/oder Wasserdampf im Kaltprozess ist daher vorteilhaft und in der Regel sogar bevorzugt.

Sofern das Produkt in mindestens einem Zerkleinerungsschritt mit Wasser und/oder Wasserdampf in Kontakt gebracht wurde, wird bevorzugt ein Trocknen durchgeführt, wobei ein Restwasseranteil im getrockneten Produkt verbleibt. Als Trocknungsverfahren kann beispielweise ein Gefriertrocknen eingesetzt werden. Dies wird insbesondere bei der Nassmahlung in kondensiertem Wasser durchgeführt. Bei der Mahlung unter Verwendung von Wasserdampf wird bevorzugt ein anderes Trocknungsverfahren verwendet. Ein Gefriertrocknen hat den Vorteil, dass hierdurch auf eine sehr schonende Art und Weise bei besonders niedriger Temperatur getrocknet werden kann, was für die Herstellung des erfindungsgemäßen Festkörper-Lithiumionen-Leitermaterials daher besonders vorteilhaft ist. Das Gefriertrocknen wird vorzugsweise erst nach der Feinmahlung eingesetzt. Das hierbei hergestellte Produkt weist eine hohe spezifische Oberfläche (>0,5 m²/g) auf, so dass die kleinen Partikel nunmehr in Wechselwirkung miteinander treten können und - insbesondere bei Anwendung einer einfachen, thermischen Trocknung - schwer aufbrechbare Agglomerate oder sogar Aggregate bilden könnten. Die Gefriertrocknung wirkt diesem Phänomen entgegen. Andere Verfahren zum Trocknen, bevorzugt ein schonendes Trocknen, sind ebenfalls möglich.

An Schritt (4) kann sich, bevorzugt unmittelbar an Schritt (4) ohne Zwischenschritt, ein Schritt (5) anschließen, mit dem ein verbliebener Restwasseranteil durch eine Temperaturbehandlung entfernt werden kann. Dieser Schritt (5) ist ein optionaler Schritt, der bei einer entsprechenden Verfahrensführung, beispielweise beim Fritten in Wasser und anschließender Trockenmahlung nicht erforderlich wäre. Schritt (5) umfasst das Durchführen einer Temperaturbehandlung zum Entfernen des im erhaltenen Produkt verbliebenen Restwassers bei einer Temperatur von mindestens 200 °C, wobei die Temperaturbehandlung unter Abwesenheit von CO₂ in der umgebenden Atmosphäre durchgeführt wird, unter Erhalt eines Pulvers eines Festkörper-Lithiumionen-Leitermaterials mit einem Wassergehalt < 1,0 Gew.-%.

Es wurde gefunden, dass wenn zunächst eine Beladung des Festkörper-Ionen-Leitermaterials mit Wasser während der vorangehenden entsprechenden Prozessierungsschritte stattfindet, dieses Wasser ohne nennenswerte Beeinträchtigungen des Materials und dessen Funktionalität wieder beseitigt werden kann, wenn das hierbei mit Wasser beladene Zwischenprodukt in einem definierten Temperaturbehandlungsschritt gemäß dem optionalen Schritt (5) bei mindestens 200 °C, bevorzugt mindestens 300 °C, bevorzugt mindestens 400 °C, weiter bevorzugt mindestens 500 °C, behandelt wird. Eine Obergrenze für die Temperatur hängt stark vom Grundmaterial sowie von den einzelnen Modifikationen ab. Zudem steigt die Effektivität, auch hartnäckiger gebundenes Wasser auszutreiben, mit zunehmender Temperatur. Oberhalb 400 bis 500 °C besteht allerdings die Gefahr, ein Problem mit Versintern unter unerwünschter Aggregatbildung oder Zersetzung der funktionellen Strukturkomponenten zu bekommen. Die Temperatur kann je nach Einzelfall auch überschritten werden.

Ziel des Verfahrens der Erfindung ist in jedem Fall ein Pulver, dessen Partikel aus einem Lithiumionen-leitenden Material mit einer Leitfähigkeit von mindestens 10⁻⁵ S/cm bei Raumtemperatur bestehen, und das trotz Kontakt mit flüssigem oder dampfförmigem Wasser während seiner Herstellung nur einen Wassergehalt < 1,0 Gew.-%, bevorzugt 0,99 Gew.-% oder weniger, aufweist.

Die Verfahrensschritte des Kaltprozesses können sich bevorzugt unmittelbar ohne zusätzliche Verfahrensschritte aneinander anschließen.

Das erfindungsgemäße Verfahren ist auch für die Herstellung von Festkörper-Lithiumionen-Leitermaterialien in großindustriellem Maßstab geeignet. Eine hochvolumige Bereitstellung von Festkörper-Lithiumionen-Leitermaterialien in Pulverform ist unter ökonomischen Gesichtspunkten insbesondere dann möglich, wenn zur Herstellung entlang der gesamten Prozesskette kostengünstige Prozesse zum Einsatz kommen. Die Verwendung von Wasser und/oder Wasserdampf ist hierbei von besonderem Vorteil.

Gegenstand der Erfindung ist auch ein Festkörper-Lithiumionen-Leitermaterial in Form eines Pulvers, erhältlich durch das oben beschriebene Verfahren der vorliegenden Erfindung.

Unter dem "Festkörper-Lithiumionen-Leitermaterial" wird in der vorliegenden Erfindung ein Material verstanden, das aus lithiumionenleitendem Material besteht und eine Ionen-Leitfähigkeit von mindestens 10⁻⁵ S/cm bei Raumtemperatur aufweist.

Geeignete Materialien für das erfindungsgemäße Verfahren sind Granat-basierte Ionenleiter, wie sie in DE 102014100684 B4 beschrieben werden, Glaskeramiken mit NaSICon-Struktur, wie LATP, LAGP (z.B. DE 10 2018 102 387 B3), aber auch lonenleiter mit Perovskit-Struktur, wie Lithium-Lanthan-Titanate, oder amorphe lonenleiter, bspw. Borat oder Phospate-Gläser, sind denkbar. Auch für die Herstellung von Li-Ionenleitenden Elektrodenmaterialien, wie Lithium-Vanadium-Phosphat, eignet sich das erfindungsgemäße Verfahren.

Das Festkörper-Lithiumionen-Leitermaterial der vorliegenden Erfindung zeichnet sich neben einer hohen elektrischen Leitfähigkeit insbesondere durch eine gute Versinterbarkeit schon bei vergleichsweise niedrigen Temperaturen aus. Besonders kleinere Partikelgrößen, die beispielweise durch eine Nassmahlung erfindungsgemäß zur Verfügung gestellt werden können, bewirken eine hohe Sinteraktivität.

Die vorliegende Erfindung bezieht sich weiterhin auf die Verwendung des Festkörper-Lithiumionen-Leitermaterials in Form eines Pulvers in Batterien oder Akkumulatoren, bevorzugt Lithium-Batterien oder Lithium-Akkumulatoren, insbesondere Separatoren, Kathoden, Anoden oder Feststoff-Elektrolyten.

Die erfindungsgemäßen, durch Wasser(dampf)kontakt hergestellten, lithiumionenleitenden Pulvermaterialien können allein oder zusammen mit weiteren Batteriematerialien verwendet werden, beispielweise versintert zu einer rein anorganischen, keramischen Membran, oder als Elektrolyt, eingearbeitet als Füllstoff in einen Polymerelektrolyten bzw. in Polyelektrolyten, in wiederaufladbaren Lithiumionenbatterien, insbesondere in Feststoff-Lithiumionenbatterien (all-solid-state batteries (ASSB)). Einerseits ist dabei der Einsatz als Separator möglich: Zwischen die Elektroden eingebracht, bewahrt er diese vor einem unerwünschten Kurzschluss und stellt dadurch die Funktionsfähigkeit des Gesamtsystems sicher. Dazu kann das entsprechende Komposit entweder als Schicht auf eine oder beide Elektroden aufgebracht oder als freistehende Membran als Festkörperelektrolyt in die Batterie integriert werden. Andererseits ist die Co-Sinterung bzw. Compoundierung mit den Elektrodenmaterialien möglich: In diesem Fall bewerkstelligt der Festkörperelektrolyt den Transport der relevanten Ladungsträger (Litihiumionen und Elektronen) zu den Elektrodenmaterialien und zu den Leitelektroden hin bzw. weg - je nachdem, ob die Batterie gerade entladen oder geladen wird.

Nachfolgend wird die vorliegende Erfindung anhand von Beispielen näher erläutert, ohne diese hierauf zu beschränken.

### Ausführungsbeispiele

### Ausführungsbeispiel 1

Herstellungsbeispiel von einem Festkörper-Lithiumionen-Leitermaterial, das auf Basis einer Granatstruktur kristallisiert, am Beispiel von Lithiumlanthanzirkoniumoxid (LLZO) als wasserarmem Pulver.

Die Herstellung erfolgt mit dem erfindungsgemäßen Verfahren über einen Heißprozess in Form eines Schmelzprozesses, freies Abkühlen der Schmelze, Grobzerkleinerung unter trockenen Bedingungen, Nassmahlung in Wasser mit anschließender Gefriertrocknung und Temperaturbehandlung bei 700 °C unter trockener N₂-Atmosphäre.

Das wasserarme LLZO-Pulver gemäß Ausführungsbeispiel 1 wurde wie im Folgenden beschrieben hergestellt:

### a) Herstellen einer Nb-dotierten LLZO-Schmelze als heißes Zwischenprodukt

Verwendet wird ein sogenannter Skull-Tiegel, wie etwa in der DE 199 39 782 C1 beschrieben. Bei der Skull-Technologie wird ein wassergekühlter Tiegel verwendet, in dem sich während der Schmelze eine kühlere Schutzschicht aus dem zu schmelzenden Material bildet. Demzufolge wird während des Schmelzvorgangs kein Tiegelmaterial aufgelöst. Der Energieeintrag in die Schmelze wird mittels einer Hochfrequenz-Einkopplung über die umgebende Induktionsspule in das schmelzflüssige Material realisiert. Eine Bedingung dabei ist die ausreichende Leitfähigkeit der Schmelze, die im Fall von Lithium-Granat-Schmelzen durch den hohen Lithiumgehalt gegeben ist. Während des Einschmelzvorgangs tritt eine Lithiumverdampfung auf, was leicht durch einen Lithiumüberschuss korrigiert werden kann. Dazu wird mit einem leichten Lithium-Überschuss gearbeitet.

Im Beispiel wurden La₂O₃, Li₂CO₃, Nb₂O₅ und ZrO₂ als Gemenge verwendet, um ein Nb-dotiertes Lithiumlanthanzirkonat mit einer nominellen Zusammensetzung von Li₇₊ₓLa₃Zr_{1,5}Nb_{0,5}O₁₂ herzustellen. Die Rohstoffe wurden entsprechend der Zusammensetzung gemischt und in den nach oben offenen Skull-Tiegel gefüllt. Das Gemenge musste zunächst vorgeheizt werden, um eine gewisse Mindestleitfähigkeit zu erreichen. Hierzu wurde eine Brennerbeheizung verwendet. Nach Erreichen der Kopplungstemperatur wurde das weitere Aufheizen und Homogenisieren der Schmelze durch Hochfrequenz-Einkopplung über die Induktionsspule erreicht. Um die Homogenisierung der Schmelzen zu verbessern, wurde mit einem wassergekühlten Rührer gerührt.

### b) Herstellen eines massiven Blocks aus Nb-dotiertem LLZO als kaltes Zwischenprodukt

Die im Skull-Tiegel erzeugte LLZO-Schmelze wird durch Abschalten der Hochfrequenz-Einkopplung über die umgebende Induktionsspule direkt erstarren gelassen. Das so abgekühlte Zwischenprodukt fällt als massiver Block an.

### c) Verzicht auf eine Keramisierung

Beim direkten Erstarren der Schmelze zeigt das LLZO-Material eine spontane Kristallisation, so dass auf eine nachgeschaltete Keramisierungsbehandlung verzichtet werden kann.

### d) Herstellen eines feinen, mit Restwasser beladenen Pulvers aus Nb-dotiertem LLZO

Zur Herstellung eines noch mit Restwasser beladenen Pulvers aus dem aus Nb-dotiertem LLZO-Material bestehenden massiven Block werden folgende Zerkleinerungsschritte durchgeführt:
Zunächst wird der massive Block mit Hammer und Meißel in kleinere Bruchstücke zerhauen. Anschließend werden diese in einem oder mehreren Durchläufen einem Backenbrecher zugeführt, bis Bruchstücke einer Größe von max. 10 mm in der längsten Ausdehnung entstanden sind. Diese werden auf einer Scheibenmühle vom Typ Pulverisette 13 classic der Fa. Fritsch auf eine Größe d₉₉ < 100 µm aufgemahlen. Dieses Grobpulver wird anschließend auf eine Partikelgröße d₉₉ < 63 µm abgesiebt.

1 kg des grob gemahlenen Nb-dotierten LLZO-Pulvers mit einer Korngröße < 63 µm werden unter Verwendung eines Dissolvers (ein Scheibenrührer) in 2,33 L Wasser möglichst agglomeratfrei eindispergiert. Anschließend wird die Suspension in den Vorlagenbehälter einer Rührwerkskugelmühle eingefüllt und unter Verwendung eines Mahlraums mit Stiftsmühlenrührwerk unter Anwendung der Mehrpassagen-Fahrweise für 2,5 h aufgemahlen. Dabei ist der Mahlraum mit aus ZrO₂ bestehenden Mahlkugeln gefüllt (Füllgrad: 74 %), die einen Durchmesser von rund 1 mm aufweisen. Die Mahlung wird beendet, wenn 50% der im Mahlschlicker vorhandenen Partikeln einen Durchmesser von ungefähr 0,24 µm, 90% einen Durchmesser von rund 0,53 µm und 99% einen Durchmesser von rund 0,85 µm aufweisen. Die Messung der Partikelgrößen erfolgt unter Verwendung der Methode der statischen Lichtstreuung auf einem Partikelgrößenmessgerät der Fa. CILAS vom Typ 1064. Die Messung wird in Wasser (Brechungsindex: 1,33) als Medium durchgeführt und nach der Mie-Methode (Re = 1,8, Im = 0,8) ausgewertet.

Der Mahlschlicker wird nach der Mahlung einer Trocknung in einem Gefriertrockner unterzogen. Hierzu wird er zunächst großflächig in für den Einsatzzweck vorgesehene Produktschalen ausgegossen und bei einer Temperatur von -30 °C eingefroren. Anschließend wird ein Vakuum angelegt, dass einem für die Sublimation des Mediums erforderlichen Wert entspricht (für Wasser < 6,11 mbar). Durch anschließendes sukzessives Aufheizen der Produktschalenböden wird das gefrorene Wasser in einem Zeitraum von rund 20 h allmählich schonend aus dem festen Schlickerrückstand absublimiert.

Mit Hilfe der Methode der temperaturfraktionierten Kohlenstoff-Phasenanalytik (nach DIN 19539) wird die Summe aus dem TOC-Gehalt (temperaturabhängige Differenzierung des organischen Gesamtkohlenstoffs) und TIC-Gehalt (temperaturabhängige Differenzierung des anorganischen Gesamtkohlenstoffs) des in Wasser nass gemahlenen LLZO-Pulvers zu 0,4% bestimmt, wobei es sich bei dem detektierten Kohlenstoff überwiegend um anorganischen Kohlenstoff handelt. Der Wassergehalt wird mit 25% bestimmt.

### e) Herstellen eines feinen, von Restwasser befreiten Pulvers aus Nb-dotiertem LLZO

Um die Beladung mit Wasser und den geringfügigen Mengen an Carbonat zu reduzieren, wird das LLZO-Pulver unmittelbar nach einer Gefriertrocknung direkt in einen mit Stickstoffgas durchströmten Ofen vom Typ N20/H der Fa. Nabertherm eingebracht und für 4 h bei 700 °C ausgeheizt.

Nach dem Ausheizen wird das LLZO-Pulver aus dem abgekühlten, mit Stickstoffgas durchströmten Ofen entnommen und direkt in Beuteln aus Aluminiumverbundfolie vakuumverpackt.

Mit Hilfe der Methode der temperaturfraktionierten Kohlenstoff-Phasenanalytik (nach DIN 19539) wird der TIC-Gehalt (temperaturabhängige Differenzierung des anorganischen Gesamtkohlenstoffs) des in Wasser nass gemahlenen und nach Gefriertrocknung im Vakuum bei 700 °C, 4 h ausgeheizten LLZO-Pulvers mit 0,10%, der Wassergehalt mit 0,8% bestimmt.

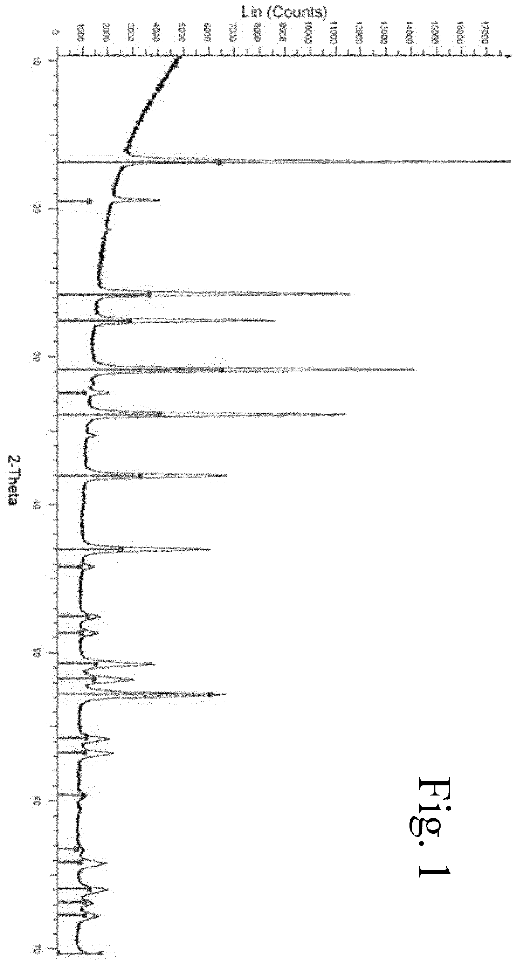

Vom ausgeheizten Pulver wird zum Zwecke der Qualitätskontrolle ein Röntgendiffraktogramm (XRD) angefertigt. Das erhaltene Röntgendiffraktogramm ist in Figur 1 abgebildet. Dieses liefert keinen Hinweis auf die Bildung unerwünschter Fremdphasen, insbesondere Lithiummangelphasen, wie z. B. Pyrochlor La₂Zr₂O₇, die zu einer drastischen Reduzierung der Leitfähigkeit führen könnten. Es weist lediglich die Reflexe der kubischen Modifikation des Nb-dotierten LLZO lauf.

0,4 g des Pulvers werden in einer Stahlpressform unter Aufwendung einer Kraft von 30 kN zu einem Grünkörper mit einem Durchmesser von 10 mm und einer Dicke von 2-3 mm uniaxial verpresst. Anschließend wird der Grünkörper bei 1130 °C, 30 min zu einem Sinterling mit einer Dichte von 90% verdichtet. Der Probenkörper wird beidseitig mit einer Goldschicht versehen und mit Hilfe der elektrochemischen Impedanzspektroskopie (EIS) bei Raumtemperatur auf seine Leitfähigkeit vermessen. Dabei wird nach Auswertung der Messdaten ein Leitfähigkeitswert von 6,3 x 10⁻⁴ S/cm ermittelt.

### Ausführungsbeispiel 2

Herstellungsbeispiel von einem Festkörper-Lithiumionen-Leitermaterial, das auf Basis einer Granatstruktur kristallisiert, am Beispiel von Lithiumlanthanzirkoniumoxid (LLZO) als wasserarmem Pulver

Die Herstellung erfolgt mit dem erfindungsgemäßen Verfahren über einen Heißprozess in Form eines Schmelzprozesses, freies Abkühlen der Schmelze, Grobzerkleinerung unter trockenen Bedingungen, Feinmahlung auf einer Dampfstrahlmühle und Temperaturbehandlung bei 700 °C unter trockener N₂-Atmosphäre.

Das wasserarme LLZO-Pulver gemäß Ausführungsbeispiel 2 wurde wie im Folgenden beschrieben hergestellt:
a) Herstellen einer Nb-dotierten LLZO-Schmelze als heißes Zwischenprodukt Die Herstellung erfolgt analog zu Ausführungsbeispiel 1.
b) Herstellen eines massiven Blocks aus Nb-dotiertem LLZO als kaltes Zwischenprodukt
   Die Herstellung erfolgt analog zu Ausführungsbeispiel 1.
c) Verzicht auf Keramisierunq
   Die Erläuterungen wie zu Ausführungsbeispiel 1 gelten hier ebenfalls.
d) Herstellen eines feinen, mit Restwasser beladenen Pulvers aus Nb-dotiertem LLZO

Zur Herstellung eines noch mit Restwasser beladenen Pulvers aus dem aus Nb-dotiertem LLZO-Material bestehenden massiven Block werden folgende Zerkleinerungsschritte durchgeführt:
Zunächst wird der massive Block mit Hammer und Meißel in kleinere Bruchstücke zerhauen. Anschließend werden diese in einem oder mehreren Durchläufen einem Backenbrecher zugeführt, bis Bruchstücke einer Größe von max. 10 mm in der längsten Ausdehnung entstanden sind. Diese werden auf einer Scheibenmühle vom Typ Pulverisette 13 classic der Fa. Fritsch auf eine Größe d₉₉ < 1 mm aufgemahlen.

5 kg grob gemahlenes Nb-dotiertes LLZO-Pulver mit einer Korngröße < 1 mm werden auf eine Dampfstrahlmühle vom Typ s-Jet 25 der Fa. Netzsch aufgegeben. Die Strahlmahlung erfolgt durch eine Keramikdüse unter Verwendung von überhitztem Wasserdampf als Mahlmedium mit einer Druckbeaufschlagung von 10 bar. Mit dem nachgeschalteten Sichter wird eine Pulverfraktion erhalten, die nach der Abtrennung im Kassettenfilter eine Partikelgrößen-Verteilung mit einem d₅₀ = 0,9 µm, d₉₀ = 1,6 µm und d₉₉ = 2,6 µm aufweist. Die Messung der Partikelgrößen erfolgt unter Verwendung der Methode der statischen Lichtstreuung auf einem Partikelgrößenmessgerät der Fa. CILAS vom Typ 1064. Die Messung wird in Wasser (Brechungsindex: 1,33) als Medium durchgeführt und nach der Mie-Methode (Re = 1,8, Im = 0,8) ausgewertet.

Mit Hilfe der Methode der temperaturfraktionierten Kohlenstoff-Phasenanalytik (nach DIN 19539) wird die Summe aus dem TOC- und TIC-Gehalt des in Wasser nass gemahlenen LLZO-Pulvers mit 5% bestimmt, wobei es sich bei dem detektierten Kohlenstoff überwiegend um anorganischen Kohlenstoff handelt. Der Wassergehalt wird mit 5,1 % bestimmt.

### e) Herstellen eines feinen, von Restwasser befreiten Pulvers aus Nb-dotiertem LLZO

Um die Beladung mit Wasser und die geringfügigen Mengen an Carbonat zu reduzieren, wird das LLZO-Pulver unmittelbar nach einer Gefriertrocknung direkt in einen mit Stickstoffgas durchströmten Ofen vom Typ N20/H der Fa. Nabertherm eingebracht und für 4 h bei 700 °C ausgeheizt.

Nach dem Ausheizen wird das LLZO-Pulver aus dem abgekühlten, mit Stickstoffgas durchströmten Ofen entnommen und direkt in Beuteln aus Aluminiumverbundfolie vakuumverpackt.

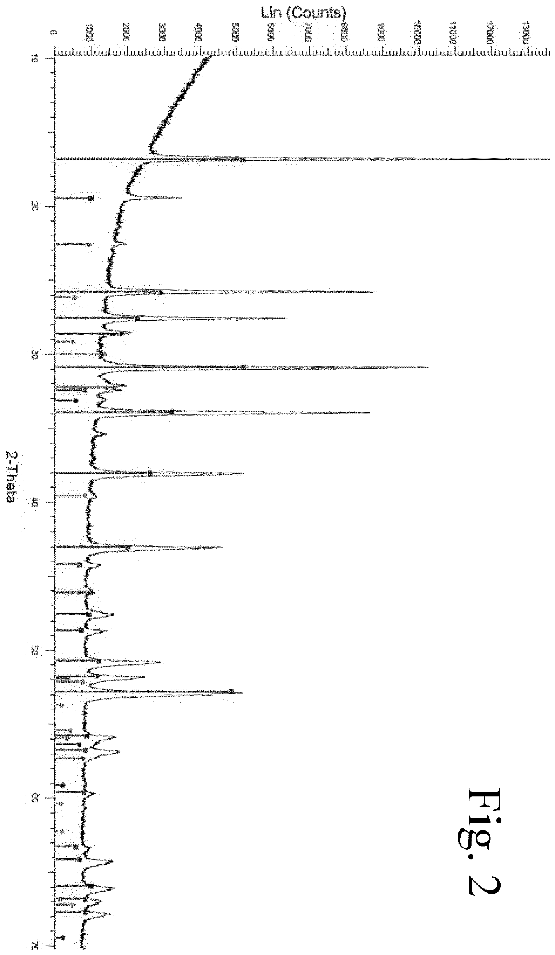

Mit Hilfe der Methode der temperaturfraktionierten Kohlenstoff-Phasenanalytik (nach DIN19539) wird der TIC-Gehalt des in Wasser nass gemahlenen und nach Gefriertrocknung im Vakuum bei 700 °C, 4 h ausgeheizten LLZO-Pulvers mit 0,1% bestimmt. Der Wassergehalt beträgt 0,9%. Vom ausgeheizten Pulver wird zum Zwecke der Qualitätskontrolle ein Röntgendiffraktogramm (XRD) angefertigt. Das erhaltene Röntgendiffraktogramm ist in Figur 2 abgebildet. Dieses liefert einen Hinweis auf die Bildung unerwünschter Lithiummangelphasen, wie z. B. Pyrochlor La_{0,33}NbO₃, La₂Zr₂O₇ und La₂O₃. Deren Anteil ist aber noch so gering, dass die Leitfähigkeit nur wenig beeinträchtigt wird.

0,3 g des Pulvers werden in einer entsprechenden Pressform unter Aufwendung einer Kraft von 30 kN zu einem Grünkörper mit einem Durchmesser von 10 mm und einer Dicke von 2 bis 3 mm uniaxial verpresst. Anschließend wird der Grünkörper bei 1130 °C, 30 min zu einem Sinterling mit einer Dichte von 92% verdichtet. Der Probenkörper wird beidseitig mit einer Goldschicht versehen und mit Hilfe der elektrochemischen Impedanzspektroskopie (EIS) bei Raumtemperatur auf seine Leitfähigkeit vermessen. Dabei wird nach Auswertung der Messdaten ein Leitfähigkeitswert von 2 x 10⁻⁴ S/cm ermittelt.

### Ausführungsbeispiel 3

Herstellungsbeispiel von einem Festkörper-Lithiumionen-Leitermaterial auf Basis der NASICON-Struktur, am Beispiel von Lithiumaluminiumtitanphosphat (LATP) als wasserarmem Pulver

Die Herstellung erfolgt mit dem erfindungsgemäßen Verfahren über einen Heißprozess in Form eines Schmelzprozesses, Quenchen (Abschrecken) der Schmelze in Wasserkontakt, Keramisierung der getrockneten Granulatpartikel, Grobzerkleinerung der Granulatpartikel unter trockenen Bedingungen, Nassmahlung in Wasser mit anschließender Gefriertrocknung und Temperaturbehandlung bei 700 °C unter trockener N₂-Atmosphäre.

### a) Herstellen einer Grünglasschmelze für borhaltiges LATP als heißes Zwischenprodukt

Ein Ausgangsglas für eine finale lithiumionenleitende, phosphatbasierte Glaskeramik der Zusammensetzung 5,5% Li₂O, 3,7% Al₂O₃, 33,1% TiO₂ und 55,5% P₂O₅ und 2,2% B₂O₃ wurde in einem Ablauftiegel bei einer Temperatur von 1650 °C erschmolzen. Die Glasschmelze wurde zur vollständigen Homogenisierung im gewählten Schmelzaggregat auf einer Temperatur von 1600 °C gehalten und hierbei mit O₂-Gas durchströmt.

### b) Herstellen eines Granulats aus borhaltigem LATP-Grünglas als kaltes Zwischenprodukt

Das über einen Schmelzprozess hergestellte Glas wird im flüssigen Zustand (Viskosität von 0,1 bis 1 dPa s, bei einer Temperatur von 1450 °C bis 1600 °C) in einem Strahl auf eine "Wasserrutsche" geleitet. Auf dieser Wasserrutsche strömt Wasser mit hoher Geschwindigkeit (Durchsatz 0,1-3 m³/min, bevorzugt 1,7 m³/min) über eine geneigte Edelstahlrinne (Neigungswinkel 10 - 75°, bevorzugt 45°). Dabei ist die komplette Wandung der Rinne am Boden mit einem Wasserfilm bedeckt. Wenn die Schmelze auf den strömenden Wasserfilm trifft, wird der Schmelzstrahl in feine Tröpfchen zerteilt. Der Tröpfchendurchmesser ist abhängig vom Abstand der Schmelzzuführung zur Rutsche, dem Neigungswinkel der Rutsche und insbesondere von der eingestellten Wasserdurchflussmenge. Der Prozess wird dabei so gefahren, dass der Durchmesser kleiner als 20 mm, bevorzugt kleiner als 10 mm, besonders bevorzugt 0,5 - 1 mm ist. Die Tropfen haben damit keinen direkten Kontakt zum darunterliegenden Stahlmaterial. An der Kontaktstelle mit dem Wasserfilm bildet sich ein Dampfpolster, so dass ein unmittelbarer Kontakt der Glasschmelze mit dem flüssigen Wasser an dieser Stelle vermieden wird. Die Tropfen bewegen sich dann in einer Flugbahn auf ein Auffanggefäß zu oder sie werden vom Wasserstrahl mitgerissen, in den sie über eine über der Wasserrinne liegende Abdeckung zurückfallen können. Unmittelbar nach der Zerteilung des Schmelzstrahls in Tropfen oder im Zeitraum ihrer Flugbewegung erstarren die Tropfen. Beim Auftreffen im Auffangbehälter oder an der Wand der Abdeckung sind sie bereits fest, jedoch noch sehr heiß (> 700 °C), und damit oberhalb der mit einer DTA-Messung (Differentiale Thermoanalyse) bestimmten Keramisierungstemperatur. Das Auffanggefäß ist mit einem Kühlmedium (im vorliegenden Fall: Wasser) gefüllt oder durchspült. Dadurch werden die (festen) Partikel beim Eintauchen so schnell abgekühlt, dass keine (oder nur geringfügige) Kristallisation eintritt. Somit erhält man ein nahezu komplett amorphes Glas(keramik)granulat (Kristallphasenanteil gemäß der nach Rietveld ausgewerteten Röntendiffraktometrie von < 15%).

Die Glasfritten-Partikel werden nach dem Abkühlen mit einem Sieb von dem als Kühlmedium dienenden Wasser abgetrennt und im Trockenschrank bei 150 °C für 12 h getrocknet.

### c) Keramisierung der Grünglasfritten-Partikel, bestehend aus borhaltigem LATP

Zur Erzeugung der eigentlich lithiumionenleitenden LATP-Phase mit NASICON-Struktur werden die getrockneten Grünglasgranulat-Partikel für 1 - 12h bei 800 °C - 980 °C, bevorzugt 6h bei 950 °C keramisiert.

Im Zuge dessen wird noch vorhandenes Restglaswasser weitestgehend aus dem Material ausgetrieben. Der Wassergehalt wird unter Verwendung des Verfahrens der temperaturfraktionierten Kohlenstoff-Phasenanalytik (nach DIN 19539), die auch zur Bestimmung dieser Kenngröße herangezogen werden kann, mit 0,05% bestimmt.

### d) Herstellen eines feinen, mit Restwasser beladenen Pulvers aus borhaltigem LATP

Zur Herstellung eines noch mit Restwasser beladenen Pulvers aus dem Glaskeramikgranulat, das aus dem borhaltigen LATP-Material besteht, werden folgende Zerkleinerungsschritte durchgeführt:
Zunächst werden die vorliegenden Partikel auf eine Scheibenmühle vom Typ Pulverisette 13 classic der Fa. Fritsch aufgegeben und hiermit auf eine Partikelgröße < 100 µm aufgemahlen.

1 kg dieses grob gemahlenen, borhaltigen LATP-Pulvers wird unter Verwendung eines Dissolvers in 2,33 L Wasser möglichst agglomeratfrei eindispergiert. Anschließend wird die Suspension in den Vorlagenbehälter einer Rührwerkskugelmühle eingefüllt und unter Verwendung eines Mahlraums mit Stiftsmühlenrührwerk unter Anwendung der Mehrpassagen-Fahrweise für 2,5 h aufgemahlen. Dabei ist der Mahlraum mit aus ZrO₂ bestehenden Mahlkugeln gefüllt (Füllgrad: 74 %), die einen Durchmesser von rund 0,8 mm aufweisen. Die Mahlung wird beendet, wenn 50% der im Mahlschlicker vorhandenen Partikel einen Durchmesser von ungefähr 0,95 µm, 90% einen Durchmesser von rund 2,43 µm und 99% einen Durchmesser von rund 3,86 µm aufweisen. Die Messung der Partikelgrößen erfolgt unter Verwendung der Methode der statischen Lichtstreuung auf einem Partikelgrößenmessgerät der Fa. CILAS vom Typ 1064. Die Messung wird in Wasser (Brechungsindex: 1,33) als Medium durchgeführt und nach der Mie-Methode (Re = 1,8, Im = 0,8) ausgewertet.

Der Mahlschlicker wird nach der Mahlung einer Trocknung in einem Gefriertrockner unterzogen. Hierzu wird er zunächst großflächig in für den Einsatzzweck vorgesehene Produktschalen ausgegossen und bei einer Temperatur von -30 °C eingefroren. Anschließend wird ein Vakkum angelegt, dass einem für die Sublimation des Mediums erforderlichen Wert entspricht (für Wasser < 6,11 mbar). Durch anschließendes sukzessives Aufheizen der Produktschalenböden wird das gefrorene Wasser in einem Zeitraum von rund 20 h allmählich schonend aus dem festen Schlickerrückstand absublimiert.

Bei Verwendung der Methode der temperaturfraktionierten Kohlenstoff-Phasenanalytik (nach DIN 19539) liegt die Summe aus dem TOC- und TIC-Gehalt des in Wasser nass gemahlenen LATP-Pulvers unterhalb der Nachweisgrenze von 0,01%. Der Wassergehalt wird mit 2,5% bestimmt.

### e) Herstellen eines feinen, von Restwasser befreiten Pulvers aus borhaltigem LATP

Um die Beladung mit Wasser und den geringfügigen Mengen an Carbonat zu reduzieren, wird das LATP-Pulver unmittelbar nach der Gefriertrocknung direkt in einen mit Stickstoffgas durchströmten Ofen vom Typ N20/H der Fa. Nabertherm eingebracht und für 4 h bei 400 °C ausgeheizt.

Nach dem Ausheizen wird das LATP-Pulver aus dem abgekühlten, mit Stickstoffgas durchströmten Ofen entnommen und direkt in Beutel aus Aluminiumverbundfolie vakuumverpackt.

Bei Verwendung der Methode der temperaturfraktionierten Kohlenstoff-Phasenanalytik (nach DIN 19539) liegt der TIC-Gehalt des in Wasser nass gemahlenen und nach Gefriertrocknung im Vakuum bei 400 °C, 4 h ausgeheizten LATP-Pulvers unterhalb der Nachweisgrenze von 0,01% Der Wassergehalt beträgt 0,7%.

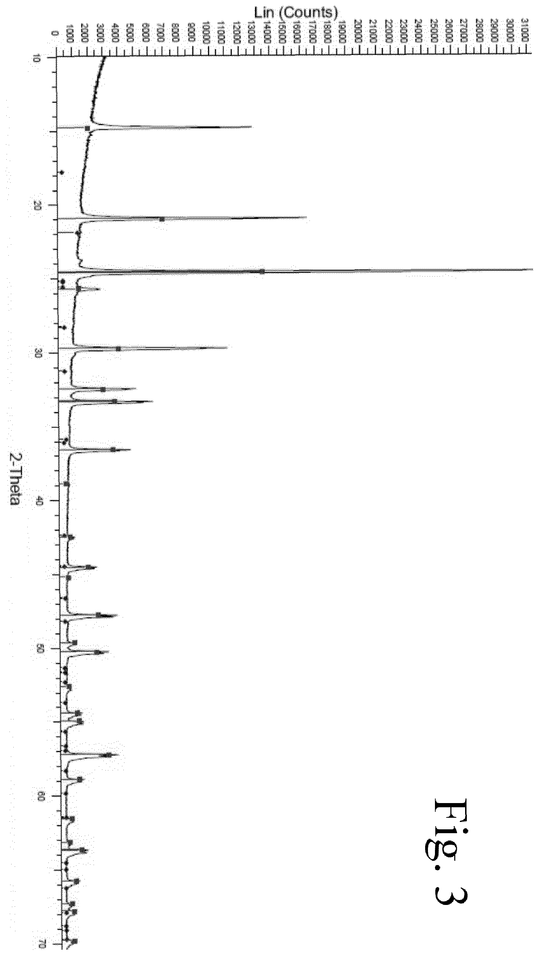

Vom ausgeheizten Pulver wird zum Zwecke der Qualitätskontrolle ein Röntgendiffraktogramm (XRD) angefertigt. Das erhaltene Röntgendiffraktogramm ist in Figur 3 abgebildet. Dieses liefert keinen Hinweis auf die Bildung unerwünschter Fremdphasen, insbesondere Lithiummangelphasen, wie z. B. AlPO₄ oder TiP₂O₇, die zu einer drastischen Reduzierung der Leitfähigkeit führen könnten. Es weist lediglich die Reflexe des LATP-Kristalls auf.

0,3 g des Pulvers werden in einer entsprechenden Pressform unter Aufwendung einer Kraft von 30 kN zu einem Grünkörper mit einem Durchmesser von 10 mm und einer Dicke von 2 bis 3 mm uniaxial verpresst. Anschließend wird der Grünkörper bei 800 °C, 3 h zu einem Sinterling mit einer Dichte von 90% verdichtet. Der Probenkörper wird beidseitig mit einer Goldschicht versehen und mit Hilfe der elektrochemischen Impedanzspektroskopie (EIS) bei Raumtemperatur auf seine Leitfähigkeit vermessen. Dabei wird nach Auswertung der Messdaten ein Leitfähigkeitswert von 9×10⁻⁴ S/cm ermittelt.

## Patentansprüche

1. Verfahren zum Herstellen eines Festkörper-Lithiumionen-Leitermaterials mit den folgenden Schritten:
(1) Bereitstellen von Ausgangsprodukten eines Festkörper-Lithiumionen-Leitermaterials;
(2) Durchführen mindestens eines Heißprozesses mit den Ausgangsprodukten des Festkörper-Lithiumionen-Leitermaterials, umfassend
- ein Schmelzverfahren,
- ein Sinterverfahren,
- ein Keramsisierungsverfahren,
- ein Calcinieren einer Sol-Gel-Vorstufe oder
- eine Bottom-up-Synthese im Pulsationsreaktor;
(3) Abkühlen oder Abschrecken des erhaltenen heißen Zwischenprodukts; und
(4) Durchführen eines Kaltprozesses unter Erzeugen eines Pulvers in einem oder mehreren Zerkleinerungsschritten;
wobei in Schritt (3) und/oder Schritt (4) das jeweilige Zwischenprodukt mit Wasser und/oder Wasserdampf in Kontakt gebracht und anschließend getrocknet wird.

2. Verfahren nach Anspruch 1,
**dadurch gekennzeichnet,**
**dass** die Ausgangsprodukte ausgewählt werden aus
- Materialien, um ein Festkörper-Lithiumionen-Leitermaterial auf Basis einer NASICON-Struktur herzustellen, bevorzugt auf Basis von Lithiumaluminiumgermaniumphosphat (LAGP) und/oder auf Basis von Lithiumaluminiumtitanphosphat (LATP), oder
- Materialien, um ein Festkörper-Lithiumionen-Leitermaterial auf Basis einer Granatstruktur herzustellen, bevorzugt auf Basis von Lithiumlanthanzirkoniumoxid (LLZO).

3. Verfahren nach Anspruch 2,
**dadurch gekennzeichnet,**
**dass** die Materialien, um ein Festkörper-Lithiumionen-Leitermaterial auf Basis einer Granatstruktur herzustellen, bevorzugt auf Basis von Lithiumlanthanzirkoniumoxid (LLZO), im Vergleich zu einer stöchiometrischen Zusammensetzung einen Überschuss an Lithium aufweisen.

4. Verfahren nach Anspruch 1,
**dadurch gekennzeichnet,**
**dass** in Schritt (3) beim Abkühlen oder Abschrecken des erhaltenen heißen Zwischenprodukts gleichzeitig das Zwischenprodukt zerkleinert wird.

5. Verfahren nach Anspruch 4,
**dadurch gekennzeichnet,**
**dass** das Zerkleinern in Schritt (3) ein Zerstäuben des heißen Zwischenprodukts in Tröpfchen oder Vereinzeln des heißen Zwischenprodukts in Partikel darstellt, wobei das heiße Zwischenprodukt in Kontakt mit Wasser und/oder Wasserdampf kommen kann.

6. Verfahren nach einem der vorangehenden Ansprüche 1 bis 5,
**dadurch gekennzeichnet,**
**dass** in Schritt (3) das heiße, noch flüssige Zwischenprodukt in Kontakt mit Wasser und/oder Wasserdampf kommt und unter Verwendung einer Wasserdüse oder einer Wasserrutsche in Tröpfchen zerstäubt wird.

7. Verfahren nach Anspruch 6,
**dadurch gekennzeichnet,**
**dass** in Schritt (3) unter Verwendung einer Wasserrutsche der Tröpfchendurchmesser des flüssigen Zwischenprodukts in Abhängigkeit vom Abstand der Schmelzzuführung zur Wasserrutsche, dem Neigungswinkel der Wasserrutsche im Bereich von 10 - 75°, bevorzugt 45°, und von der eingestellten Wasserdurchflussmenge im Bereich von 0,1-3 m³/min, bevorzugt 1,7 m³/min, auf kleiner als 20 mm, bevorzugt kleiner als 10 mm, besonders bevorzugt im Bereich von 0,5 - 1 mm eingestellt wird.

8. Verfahren nach einem der vorangehenden Ansprüche 1 bis 7,
**dadurch gekennzeichnet,**
**dass** nach Schritt (3) und vor Schritt (4) ein Zwischenschritt durchgeführt wird, umfassend das Tempern des abgekühlten Zwischenprodukts zum Einstellen der gewünschten Kristallstruktur mit einem definierten Temperatur-Zeit-Programm für das Aufheizen, Halten und Abkühlen, jeweils gegebenenfalls mit Zwischenhalteschritten.

9. Verfahren nach Anspruch 8,
**dadurch gekennzeichnet,**
**dass** der Zwischenschritt wiederholt durchgeführt wird, um die gewünschte Kristallphasenzusammensetzung und den Kristallanteil einzustellen.

10. Verfahren nach einem der vorangehenden Ansprüche 1 bis 9,
**dadurch gekennzeichnet,**
**dass** sich an Schritt (4) ein Verfahrensschritt (5) anschließt, umfassend das Durchführen einer Temperaturbehandlung zum Entfernen des im erhaltenen Produkt verbliebenen Restwassers bei einer Temperatur von mindestens 200 °C, wobei die Temperaturbehandlung unter Abwesenheit von CO₂ in der umgebenden Atmosphäre durchgeführt wird, unter Erhalt eines Pulvers eines Festkörper-Lithiumionen-Leitermaterials mit einem Wassergehalt < 1,0 Gew.-%.

11. Verfahren nach Anspruch 10,
**dadurch gekennzeichnet,**
**dass** Schritt (5) bei einer Temperatur von mindestens 300 °C, bevorzugter mindestens 400 °C, weiter bevorzugt mindestens 500 °C, durchgeführt wird.

12. Verfahren nach einem der vorangehenden Ansprüche 1 bis 11,
**dadurch gekennzeichnet,**
**dass** im Kaltprozess gemäß Schritt (4) das Rohprodukt in Pulverform mit der gewünschten Teilchengröße und Korngrößenverteilung überführt wird, der einen oder mehrere der folgenden Schritte umfasst:
- Zerkleinern mit Hammer und Meißel;
- Zerkleinern mit Walzen- und/oder Backenbrecher;
- Zerkleinern mit Kugel- und/oder Hammermühlen;
- Zerkleinern mit Kugel-, Prall- und/oder Planetenmühlen;
- Zerkleinern mit Seiben-Schwingmühlen;
- Zerkleinern mit Gegenstrahl-, Spiralstrahl- und/oder Dampfstrahlmühlen;
- Zerkleinern mit Trocken- und/oder Nasskugelmühlen;
- Zerkleinern mit Trocken- und/oder Nassrührwerkskugelmühlen;
- Zerkleinern durch Hochenergiemahlen in hochkinetischen Rotorkugelmühlen.

13. Festkörper-Lithiumionen-Leitermaterial in Form eines Pulvers, erhältlich durch das Verfahren nach einem der vorangehenden Ansprüche 1 bis 12.

14. Verwendung des Festkörper-Lithiumionen-Leitermaterials in Form eines Pulvers in Batterien oder Akkumulatoren, bevorzugt Lithium-Batterien oder Lithium-Akkumulatoren, insbesondere Separatoren, Kathoden, Anoden oder Feststoff-Elektrolyten.
